# EUROPEAN PATENT APPLICATION

(11) **EP 4 389 381 A1**
(43) Date of publication of application: **26.06.2024**
(21) Application number: 22215955.0
(22) Date of filing: 22.12.2022
(51) Int. Cl.: B29B 11/16, B29C 31/00, B29D 99/00, B65G 39/04, B65G 39/14

(54) **PREFORM ELEMENT SUPPORT DEVICE, WORK STATION AND METHOD FOR REMOVING A VACUUM BAG**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Preform element support device (9) for supporting a longitudinal preform element (6), in particular for a wind turbine blade, during removal of a vacuum bag (7) of the preform element (6), comprising
- vertically extending holding means (10) at each lateral side positioned at a lateral distance (11), and
- multiple, laterally extending support portions (17) spanning the lateral distance (11) between the holding means (10), the multiple support portions (17) having a staggered arrangement in the longitudinal direction (18),
- wherein the support portions (17) are saggingly mounted to the holding means (10) and are flexible to conform to a shape of a preform element (6) supported on the support portions (17).

## Description

The invention concerns a preform element support device for supporting a longitudinal preform element, in particular for a wind turbine blade, during removal of a vacuum bag of the preform element, a work station and a method for removing a vacuum bag from a longitudinal preform element, in particular for a wind turbine blade.

Wind turbines usually comprise a rotor having multiple wind turbine blades. For example, such a wind turbine may convert the mechanical energy of the wind into electrical energy. Since large-scale energy production is sought, the wind turbines and, accordingly, the wind turbine blades have an enormous size, such that their manufacturing is a major challenge for manufacturers of wind turbines. While, for a long time, wind turbine blades have been fabricated from fiber-reinforced material involving the handling of large parts like fiber mats by casting the shell of the wind turbine blade, technologies have been proposed to facilitate manufacturing of wind turbine blades.

For example, it has been proposed to use preform elements, or preforms, respectively. Such preform elements are preformed smaller parts or segments of the wind turbine blade, which are used for building the respective wind turbine blade shell. The preform elements are prefabricated separately and then arranged and aligned in a blade mold according to the requested geometry of the wind turbine blade to be manufactured. The preform elements may be arranged in the blade mold for casting an entire wind turbine blade or a large wind turbine blade part.

The preform elements may comprise one or more components, for example one or more textile layers, wherein the components are at least locally attached to each other by using a binding agent/adhesive agent. Such components may, for example, comprise a plurality of fiber mats and/or core materials, which are locally attached to each other to allow for their mutual handling. This facilitates the arrangement of the components in the blade mold. Preform elements may be understood as semi-solid elements. In particular, textile components of the preform elements, for example fiber mats, may consist of glass fibers, carbon fibers, or aramid fibers. These layers remain unaffected by the binding agent, such that they can be filled later on with a resin during the manufacturing of the rotor blade. Core material may, for example, comprise balsa wood, foam and the like. Using preform elements in particular allows to reduce the cycle time for production of wind turbine blades.

Preform elements may, for example, be fabricated in a manufacturing system, which may comprise a preform mold. Such a preform mold usually comprises a mold element, for example a mold shell, which comprises a molding surface shaped according to the desired shape of the preform element, whereon the components are placed to assume the corresponding shape. Often, the preform elements are covered in a vacuum bag to stabilize the stack of components that constitutes the preform element. These vacuum bags have to be removed before the preform element is used in a blade mold, which is usually done at a respective work station, where the preform element has to be temporarily supported such that its shape and/or the components do not experience any adverse influences by a preform element support device.

In modern wind turbines, wind turbine blades of different geometries, in particular sizes, are employed. Hence, if different types/sizes of wind turbine blades are to be manufactured, the size of the preform elements varies in accordance with the blade dimensions they are intended to be used for. In particular, preform elements primarily vary in height and width, wherein, in addition, even in a certain type of wind turbine blade, different shapes may occur.

However, manufacturing systems for preform elements, in particular the preform molds and work stations for removal of vacuum bags, today are mostly designed for a certain preform element size and/or shape. In particular, preform elements of a given size and shape are manufactured in dedicated manufacturing systems for preform elements. This, however, is not a viable approach for mass production, since a very large number of preform molds and preform element support devices would be required as well as, in many cases, lifting and/or transport tools.

WO 2019/115 522 A1 proposes a method of manufacturing at least two preforms for molding a wind turbine blade, wherein the preform mold structure used has a molding surface of variable shape such that the shape of the molding surface can be varied at least between a first and a second configuration by using actuators. However, mold elements having a molding surface of variable shape are of a complex, expensive construction and in particular do not allow for scaling the shapes provided by such an adaptable mold element.

The post-published European patent application EP 21209596.2 discloses using a vacuum bag during manufacturing of a preform element. For a simple handling of the evacuated vacuum bag arrangement, the vacuum bag comprises several, preferably reinforced handling holes arranged at one or more side or edge areas of the bag. These handling holes may for example receive pins or other gripping or coupling means of any kind of transfer means, which is adapted to for example transfer the evacuated vacuum bag arrangement from the mold to for example an intermediate transport means, which transports the evacuated vacuum bag arrangement to the heating means or the work station for removal of the vacuum bag.

It is an object of the current invention to provide an improved work station design for removal of vacuum bags, in particular when handling differently sized and/or shaped preform elements.

This object is achieved by providing a preform element support device according to claim 1, a work station according to claim 11 and a method according to claim 15.

A preform element support device for supporting a longitudinal preform element, in particular for a wind turbine blade, during removal of a vacuum bag of the preform element, according to the invention comprises
- vertically extending holding means at each lateral side positioned at a lateral distance, and
- multiple, laterally extending support portions spanning the lateral distance between the holding means, the multiple support portions having a staggered arrangement in the longitudinal direction,
- wherein the support portions are saggingly mounted to the holding means and are flexible to conform to a shape of a preform element supported on the support portion.

The design of the support portions is such that the preform element is only locally supported along its length, in particular at the longitudinal positions of the staggered arrangement, but as extensive as possible in the lateral direction (width direction), where the flexible support portions adjust to the shape, in particular the lateral height profile, of the preform elements. In this manner, the components of the preform element and especially its shape are not negatively influenced, protecting the preform element from damage during removal of the vacuum bag. In other words, the support portions are generally configured and chosen such that wrinkles in the preform element, for example in fiber mats, are prevented and the geometry is preserved. Additionally, since supportability is provided in principle over the lateral distance spanned by the support elements, the preform element support device is suitable for preform elements having different widths. However, since the shape adjustability may be limited for larger widths and/or longitudinal positioning may less defined for smaller widths, the preform element support device may preferably also comprise a positioning device for the holding means to adjust different lateral distances, i.e. a width adjustment device, as further discussed below.

According to the invention, means are provided to implement a vacuum bag removal work station for preform elements that is flexible regarding the size and/or shape of the preform elements. The work station may be part of a manufacturing system, where, for example, also a flexible preform mold is provided. Such a flexible preform mold, for example at a packing station for the preform elements, may comprise a mold element support device and a mold element. Here, interchangeable mold elements for a large number of sizes and/or shapes of preform elements can be provided. The work station according to the invention can be used for all those shapes and/or sizes.

The preform element support device, and hence, the work station, can handle preform elements with varying geometries. The work station is not specific for a certain wind turbine blade, in particular a certain size/dimension of a wind turbine blade. Hence, the preform element support device can be used for preform elements for several different wind turbine blade types.

Regarding the holding means and support portions, as will be further detailed below, the preform element support device can be implemented as modular, such that it can, for example, be disassembled and tightly packed into a transport housing, for example a container. If separate column elements, in particular pairs, along the longitudinal direction of the preform element support device are provided as holding means, a length adjustment can easily be provided by adding or removing column elements, due to the modular construction.

In some cases, the ability of the flexible support portion to adjust to different shapes may not suffice for actual shapes, in particular those that have different height in the lateral edge regions of the preform elements. In embodiments, hence, also a height adjustment device may be provided for easy adjustment is possibly to varying heights in lateral side regions or along the length of the preform element. Such varying heights (and/or widths) of a certain preform element may be due to special design features, which may, for example, be provided for lightning protection systems and the like. If, for example, the lateral edge of a preform element is locally higher than along the rest of the length, the holding means, for example a corresponding column element, may be adjusted to this larger height. Accordingly, the already mentioned, optional positioning device may be used to adjust for locally larger or smaller widths, which, however may also be taken account of by the multiple flexible support portions.

The general height of the holding means can be chosen to provide an optimal working height, in particular regarding manufacturing personnel and/or assistance devices used during removal of the vacuum bag.

Generally speaking, vacuum bag removal equipment can also be re-used or even, if a blade type is discontinued, recycled for use with another wind turbine blade type. Hence, in addition to cost-effectiveness, a quick transition to a new blade type manufacturing is possible. The process of removing the vacuum bag may be assimilated or even standardized for different types of wind turbine blades, making it easier for manufacturing personnel to switch between the production of different blade types. In particular, the preform element support device and the work station may also be used for different types of wind turbine blade manufacturing. For example, they may be used for integral blade manufacturing as well as blade half manufacturing.

Generally, the support portions and the holding means may be of the same design along the whole length of the preform element support device. However, in embodiments, it may also be possible to use different support portions at different longitudinal positions, which is, however, less preferred.

In concrete embodiments, the support portions may comprise a carrying wire, in particular having rollers mounted on it and/or an at least essentially cylindrical, in particular rotatingly mounted, support pillow and/or at least one strap-like element having a contact surface, in particular comprising a low-friction material, for the preform element. The support portions may comprise a carrying wire (or, analogously, a carrying cord or cable). To facilitate movement of preform elements on such a carrying wire, for example during loading and/or unloading, a plurality of rollers may be mounted to the carrying wire, rotating around a lateral rotation axis. The rollers may be densely placed to, on the one hand, still allow predetermined flexibility to adjust to the shape of the preform element and, on the other hand, permit sufficiently extensive support to prevent wrinkles and/or influences on the shape. Furthermore, the support portions may comprise an at least essentially cylindrical, in particular rotatingly mounted support pillow. Such a support pillow, which may preferably be elastic at least perpendicular to the lateral direction, conforms to the shape of a preform element supported by it very well and also provides laterally continuous support. On the other hand, when being mounted rotatably around its central axis, it also facilitates the movement of preform elements on it. In other embodiments, the support portions may also comprise at least one strap-like element, for example the strap itself, having a contact surface, in particular comprising a low-friction material for the preform element. For example, if such a strap-like element is not made of a low friction material by itself, pads of a low friction material may be attached at least to its flat sides. In this manner, preform elements may slide on the contact surfaces. Such contact surfaces or areas made of low-friction material may also advantageously be used for other embodiments of the support portions, for example for the support pillow.

As already mentioned, in especially preferred embodiments, the preform element support device further comprises a positioning device for the holding means to adjust different lateral distances. In particular, such a positioning device my also allow local adjustment, for example if a preform element has a relevantly varying width along its length. For example, a smaller lateral distance can be adjusted locally corresponding to a narrow section of the preform element. Generally, by providing such a positioning device, the properties of the support portions may be optimized for preform elements currently processed, in particular in combination with an advantageous lateral distance compensating device for the support portions.

In a concrete, advantageous embodiment, the holding means may comprise two laterally opposingly positioned column elements for each support portion, wherein the positioning device is configured to individually and/or collectively adjust the lateral position of each of the column elements. By constructing the holding means as separate column elements along the longitudinal direction, local adjustment becomes possible and the modularity of the preform element support device is improved.

Preferably, in such a configuration the positioning device may comprise shared lateral rails for each pair of laterally opposingly positioned column elements, the rails extending in the lateral direction at each support position of the staggered arrangement. Such rails may, for example, be integrated into the floor or, preferably, be releasably mounted to the floor using attachment means. The column elements are, in particular individually, guided in or on the lateral rails. Hence, their lateral position can easily be adjusted. In a modular construction of the preform element support device, the rails with the column elements on them and the respective support portions mounted to the column elements may form a module. For length adjustment, such modules may be added or removed respectively.

In especially preferred embodiments, a lateral distance compensating device may be provided for each support portion to complement the positioning device. In particular, by changing the lateral distance between the holding means, in particular a pair of column elements, if the lateral length of the support portions remains the same, the arcs which they describe when sagging change and hence flexibility to adapt to different shapes may also be influenced. A lateral distance compensating device is configured to adjust the sagging length of the support portions, in particular to be able to provide optimal arch forms, in particular for different widths. If, for example, the lateral distance is increased, it may be expedient to provide a longer support portion such that they sag low enough. On the other hand, if the lateral distance is decreased, the freely sagging part of the support portion may be reduced to, for example, prevent touching the ground.

In a concrete, exemplary embodiment the flexible support portion may extend into the holding means at at least one lateral side, may be deflected into the height direction, for example by a deflection pulley, and be attached to a height-adjustable plate of the lateral distance compensating device, in particular via a spring. In this manner, the lateral distance compensating device may be housed in the holding means, in particular in a column element, and hence neither be visible nor subjected to environmental influences. The holding means in this embodiment serve as storage room for further length of the support portion and, additionally, provide the room for the lateral distance compensating device. In a concrete example, an actuator, in particular an electric motor, may be provided for height adjustment of the plate, in particular rotating the plate against a threaded rod, onto which the plate is mounted by a mating thread.

In general embodiments, as also already indicated, height adjustment for the support portion, in particular their mounting positions to the holding means, may also be provided. Preferably, the support portions may be mounted to the holding means at at least one side by a mounting component located at least partly outside of the holding means, which is height-adjustable. In a concrete, combined embodiment, for example, holding means on one lateral side may comprise the lateral distance compensating device, while a height adjustment means may be provided at or in the holding means at the other lateral side. Height adjustment means may, however, also be provided in addition to lateral distance compensating devices, for example, by providing column elements as comprising a telescopic device allowing to change the height.

In a concrete embodiment a height adjustment means for the mounting components may comprise vertical rails in the holding means. The mounting components are guided in or on those vertical rails. For example, a carriage may be guided in a hollow inside of a column element, which has the part of the mounting component located outside of the holding means attached to it through a long opening in the height direction.

In preferred embodiments the support portions may be attached to the holding means via a resiliently length-adjustable element, in particular a spring. Advantageously, such a spring allows better adaptation to the shapes of preform elements. Furthermore, the resiliently length-adjustable element may at least partly compensate different heights, if, for example, individual height-adjustability at at least one lateral side is provided. In addition, compensation may also be at least partly provided for adjustments of the lateral distance, if a positioning device is provided. In particular, as already mentioned, a combination of a lateral distance compensating device and a spring may be employed to provide optimal flexibility regarding the shape of preform elements and adjustments.

A work station for removing a vacuum bag from a longitudinal preform element, in particular for a wind turbine blade, according to the invention comprises a preform element support device according to the invention and at least one assistance device for removing the vacuum bag. All features and remarks regarding the preform element support device may analogously be applied to the work station according to the invention, such that the same advantages can be achieved, as already discussed above.

In an embodiment, the assistance device may comprise a lifting device for lifting the preform element. For example, the preform element may be lifted from a vacuum bag section located below the preform element when an upper section of the vacuum bag has been removed from the upper surface of the preform element. Advantageously, the lifting device may be or comprise a vacuum lifter, which allows engaging the preform element, in particular an exposed upper surfacem, from above and subsequently lift the preform elements. Other such lifting devices comprising an attachment device configured to be attached to a surface from above may, of course, also be used. For example, a lifting device as described in post-published European patent application EP 22164431.3 may be employed.

In embodiments, the assistance device may also comprise at least one pulling device, in particular a winch assistance device, for pulling an upper section of the vacuum bag from the preform element. For example, the vacuum bag may be slit open at the far end and the upper section may be coupled to the pulling device, in particular the winch assistance device, which has been installed at the near end, such that the upper section of the vacuum bag may be removed. In other workflows, the vacuum bag may comprise two vacuum foils, in particular one forming the upper section and one forming the lower section, which are held together by fixing means, for example sticky tape or other auxiliary material. In such an embodiment, after removing the fixing means or by simply pulling at one vacuum foil, in this case the upper section, the two vacuum foils may be separated from each other.

A winch assistance device as an example for a pulling device for pulling at least an upper portion of a vacuum bag from a preform element supported on a preform element support device may comprise:
- mounting means for releasably mounting the winch assistance device to the preform element support device, in particular to column elements of the holding means,
- a winch assembly attached to the mounting means comprising a towing cable attached to a wheel of the winch assembly at one end, and
- a coupling means for coupling to the vacuum bag at the other end of the towing cable.

Such a winch assistance device can be flexibly used also for other purposes, for example for loading and/or unloading items to or from a rack or other transport and/or storage device. For example, to load an item, the winch assistance device may be mounted to the rack, in particular to a frame structure, at a location longitudinally opposite to the current location of the item to be loaded. The towing cable can be drawn to the near end of the item regarding the rack and can be coupled to the item via the coupling means. A manual or electric actuator for turning the reel can then be actuated to pull the item longitudinally into the frame structure. For unloading preform elements, on the other hand, for example to the work station according to the invention, the winch assistance device may be mounted to a work station component, for example the holding means. After coupling to the item, the preform element can be, in particular slidingly, pulled out from the rack onto the support portions.

In an embodiment, the coupling means may comprise a plate-like, in particular flexible and/or tensile, coupling element and a coupling pin. The coupling element comprises a through hole for the pin. The preform element or vacuum bag can be coupled to the towing cable by the coupling element by introducing the coupling pin through the trough hole and a through hole, or handling hole, respectively, provided in an edge region of the vacuum bag. The coupling pin can be held in this position by a locking means to finalize the coupling process. Such vacuum bags, as already mentioned, are described in post-published European patent application EP 21209596.2.

Further preferably, the winch assistance device may also comprise a width adjusting device to further facilitate mounting to different components and/or different mounting locations. For example, the winch assembly may comprise two lateral bearing elements comprising bearings for a shaft, to which the reel with the towing cable may be mounted. The shaft may be telescoping to implement the width adjusting device of the winch assistance device. To at least one of the bearing elements, an actuator, for example an electric motor may be mounted. The bearing elements may comprise connection portions to connect to the mounting means, which may, for example, comprise mounting brackets for each lateral side.

In such an advantageous embodiment, but also in other embodiments, the winch assistance device may be modular, such that, for example, the mounting means and the winch assembly with the coupling means may both form at least one module, in particular multiple modules. For example, the shaft may be removable from the bearing elements and the reel may be removed from the shaft. It is generally noted that such a winch assistance device may, of course, also provide multiple instances of the reel and/or the towing cable with coupling means, in particular on a common shaft. In a modular construction, the number of towing cables actually used for pulling of the upper portion of the vacuum bag may be chosen individually for each removal process.

In embodiments, the winch assistance device may also be used for additional purposes in the manufacturing system, for example for pulling components of preform elements, like fiber mats, onto a molding surface of a mold element, loading and unloading processes and the like.

Returning to the work station according to the invention, the assistance device may also comprise a shredding and/or packing means for the vacuum bag. For example, a shredding device may be placed at one end of the preform element support device, which automatically pulls in the removed vacuum bag material, in particular vacuum foil, and shreds it. Such a shredding device may also be adapted to pack the vacuum bag material after shredding, for example into packages that can be sent for recycling, in particular to a recycling facility.

In a method for removing a vacuum bag from a longitudinal preform element, in particular for a wind turbine blade, using a preform element support device according to the invention or a work station according to the invention,
- the preform element is placed on the support portions of the preform element support device, in particular after adjusting the preform element support device to at least a width of the preform element,
- an upper section of the vacuum bag covering an upper surface of the preform element is removed,
- a lifting device engaging the exposed upper surface of the preform element, in particular a vacuum lifter, lifts the preform element from the preform element support device, such that the lower section of the vacuum bag remains on the support portions, and
- the vacuum bag is removed from the preform element support device.

The work station according to the invention is hence best used by first removing the part of the vacuum bag covering the upper surface of the preform element, such that the preform element can be lifted by the lifting device, in particular a vacuum lifter, providing access to the lower section of the vacuum bag remaining on the preform element support device. In particular, before the preform element is placed on the support portions, adjustment regarding the size and/or shape, if necessary, can be performed, for example by using the positioning device and/or height adjustment means. In some cases, if only slight changes, for example regarding width, exist between consecutive preform elements to be processed, these differences may be compensated by the flexible supporting means. Regarding larger differences, in particular in width, or regarding optimal adjustment to the shape the positioning device can be used to adjust to the new width, or, generally, properties. For placing the preform element on the preform element support device, the lifting device may be used. However, in other implementation options, the preform element may also be slid upon the support portion, for example from a transport and/or storage device, for example a rack, where the preform element is supported in a horizontal position. To pull a preform element from a transport and/or storage device onto the support portions, the already discussed winch assistance device may also be employed.

Once the preform element has been placed on the support portions, the upper section of the vacuum bag can be removed, for example by cutting or slitting the vacuum bag in a longitudinal direction and folding it to one or both lateral sides. This can, for example, be performed by manufacturing personnel. In another embodiment, as already discussed above, the upper section of the vacuum bag may also be pulled off using a pulling device or, in particular, the winch assistance device. While cutting in longitudinal direction or otherwise removing the upper section may require a crane, using the pulling device, in particular the winch assistance device, obviates that need.

After the upper section has been removed, the now exposed upper surface of the preform element can be engaged by the lifting device, for example a vacuum lifter, to lift it from the remaining lower section of the vacuum bag. In particular, it is possible to directly lift the preform element into a blade mold and/or a transport and/or storage device, for example a rack. The vacuum bag can then be removed from the preform element support device and, for example, be shredded. The shredded vacuum foil can be packed, for example compressed, into manageable packages for recycling.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematical drawing illustrating the manufacture and components of a preform element,
- Fig. 2: a perspective partial view of a preform element in a vacuum bag,
- Fig. 3: a first embodiment of a work station for removing the vacuum bag from a preform element during a process step,
- Fig. 4: a schematical cross-sectional view of a preform element support device used in the first embodiment,
- Fig. 5: a close-up view of another mounting design,
- Fig. 6: the embodiment of fig. 3 in another variant of the process step of fig. 3,
- Fig. 7: a winch assistance device,
- Fig. 8: a coupling means of the winch assistance device,
- Fig. 9: the work station of the first embodiment during another process step,
- Fig. 10: a module of a preform element support device in a second embodiment of a work station and
- Fig. 11: an illustration of an alternative realization of a support portion.

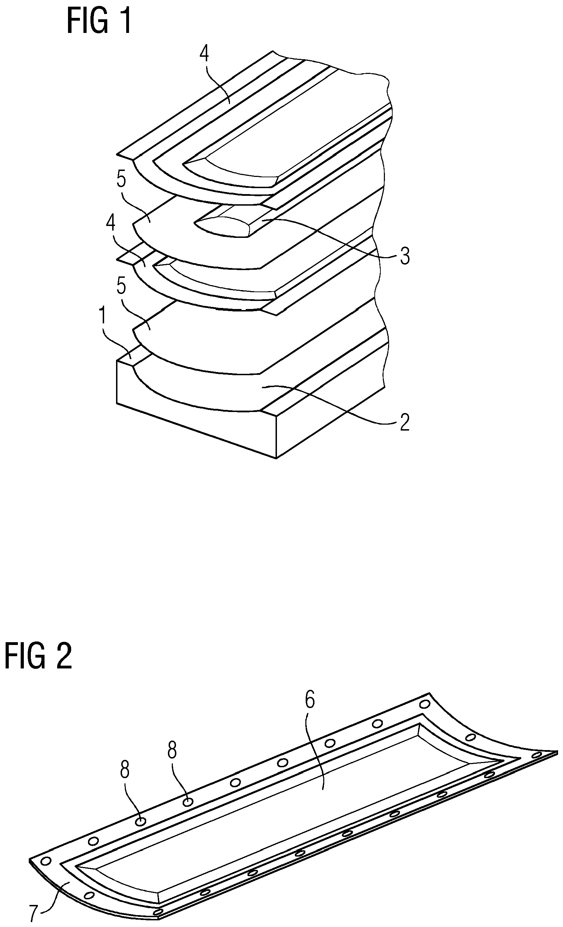

In the following the invention will be discussed with regard to preform elements used for wind turbine blade manufacture. To establish the context, fig. 1 is a principal drawing explaining the manufacture and construction of vacuum-packed preform elements. To pack a preform element, a preform mold is used which comprises a mold element 1, in particular a mold shell, having a molding surface 2 where components of the vacuum bag and the preform element can be placed. Here, in addition to the components 3 of the preform element, vacuum foil 4 to form a vacuum bag to stabilize and protect the components 3 is used as well as paper layers 5 improving the fit of the vacuum foils 4 and/or the components 3 to the geometry and preventing air pockets and the like. The components 3 may, for example, comprise fiber mats and/or core materials and/or binding agents. The molding surface 2 defines a shape desired for the preform element. By placing the components 3 on the molding surface 2, they assume the desired shape. The binding agent is supplied to locally attach the components together such that they can be handled as one single object, that is, the preform element. The binding agent may be activated by heat and hardened/cured by cooling, which can take place at the preform mold itself and/or in a dedicated heating and/or cooling device, in particular an oven, at another work station.

Fig. 2 shows the preform element 6 packed in a vacuum bag 7. Here, the vacuum bag 7 may, for example, be designed as described in post-published European patent application EP 22209596.2, comprising preferably reinforced handling holes 8 arranged at the sides of the vacuum bag 7.

Before such a preform element 6 can be used for manufacturing a wind turbine blade or a wind turbine blade part, for example a blade half, in a blade mold, the vacuum bag 7 has to be removed.

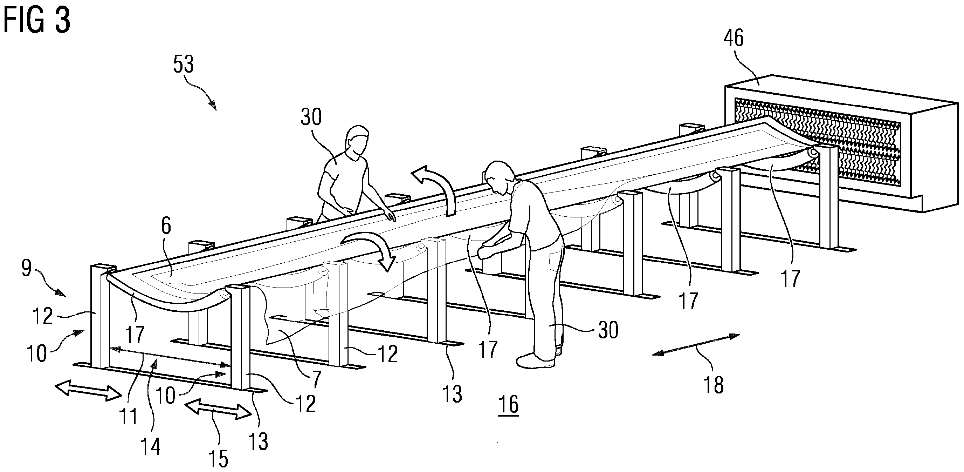

Fig. 3 shows a work station 53 for removing the vacuum bag 7 from the preform element 6. During a step, in which the upper section covering the upper surface 44 of the preform element 6 is removed first.

The work station 53 comprises a preform element support device 9 for the longitudinal preform element 6, which has lateral holding means 10 at each lateral side having a lateral distance 11. In the embodiment shown in fig. 3, the holding means 10 comprise column elements 12, wherein the pair of column elements 12 at each longitudinal position, where the preform element 6 is to be supported, are guided in a shared rail 13 as part of a positioning device 14 for adjusting a lateral distance 11, as will be further discussed later on. Hence, the column elements 12 can be moved in the lateral direction according to arrows 15.

The rail 13 is releasably mounted to the floor 16 by attachment means (not shown).

The preform element support device 9 further comprises support portions 17 which are mounted at each end to the holding means 10, in this case the column elements 12, hence extend laterally and span the lateral distance 11 between the column elements 12. The support portions 17 sag and are flexible to conform to the shape of the preform element 6, as shown.

Each rail 13 with its releasable attachment means, the column elements 12 and the respective support portion 17 forms a module of the preform element support device 9. By choosing the number of modules and their distance in the longitudinal direction 18, longitudinal adjustment is possible to match the length of preform elements 6. Furthermore, by using the modules, the preform element support device 9 is not only flexible regarding the length, but also easily transportable and tightly packable, for example into a container.

As can be seen from fig.3, a staggered arrangement in the longitudinal direction 18 results, with support portions 17 spanning laterally at each of a plurality of longitudinal positions.

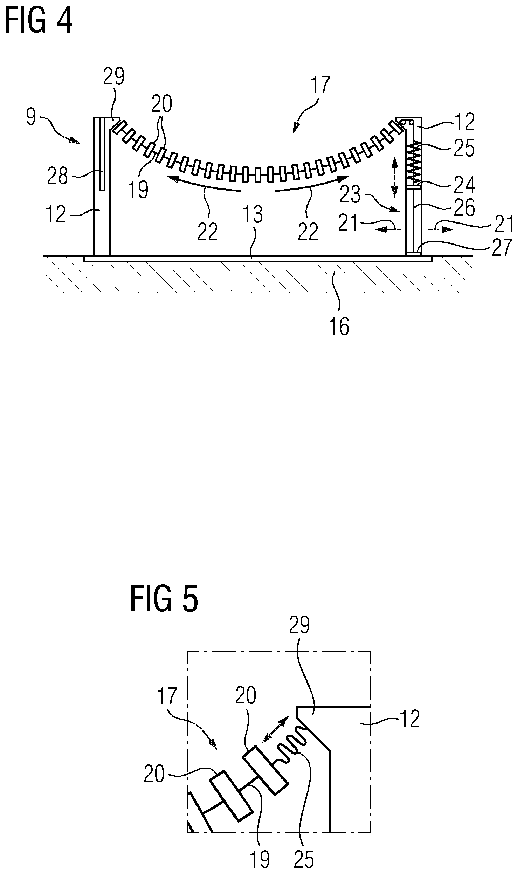

Fig. 4 is a lateral cross-section of a module of the preform element support device 9 showing the columns 12 and the saggingly mounted support portion 17 and its concrete implementation. In this embodiment, the support portion 17 comprises a carrying wire 19, onto which rollers 20 are mounted in regular distances, such that, in particular, the preform element 6 can slide on the support portions 17, for example during loading and/or unloading. The plurality of rollers 20 further allows evenly distributed support along the lateral distance 11.

As can be seen in Fig. 4, the support portion 17, due to its free length, sags in a certain arch shape depending on the lateral distance 11. Since, as again indicated by arrows 21, this lateral distance 11 is adjustable by moving the column elements 12 and the rail 13, the arched shape would change, as indicated by arrows 22. To compensate this change in lateral distance 11 and the resulting sagging shape, a lateral distance compensating device 23 is provided, which is, in the embodiment of fig. 4, built into the right column element 12. The lateral distance compensating device 23 comprises a plate 24 to which the carrying wire 19 or generally support portion 17, as shown, is prolonged into the hollow column element 12. As shown here, the support portion 17 is coupled to the plate 24 via a spring 25 as resiliently length-adjustable element, which improves the adjustment to the shape of the preform element 6 and may also provide at least some compensation for changes in lateral distance 11 (or height differences as further discussed below).

The plate 24 is threaded onto a threaded rod 26 by a mating thread and can be rotated by an actuator 27, in this case an electric motor. By means of the lateral distance compensating device 23, the arch shape can be adjusted if the lateral distance 11 changes, just as the spring 25 also helps to align the support portion 17 to the preform element 6.

In addition to the positioning device 14 and the lateral distance compensating device 23, height adjustment means 28 for adjusting the height of a mounting component 29, to which the support portion 17 is mounted, can also be provided, in the example of fig. 4 indicated in the left column element 12. In this manner, adjustment regarding height difference between the lateral sides of the preform element 6, in particular local height differences due to special features, can be performed, wherein, also regarding such height adjustments, the length of the support portion 17 sagging freely between the column elements 12 can also be adjusted by the lateral distance compensating device 23 to provide desired shape adjustment properties.

In other embodiments, height adjustment means 28 may also be provided at both sides, that is, for both column elements 12 of a pair, by, for example, making the column elements 12 themselves height-adjustable. In such a case, the height adjustment device 28 may, for example, be a telescopic device.

As shown in the variation of fig. 5, in particular if no lateral distance compensating device 23 is provided, the support portion 17 may be directly attached to the mounting component 29 via a spring 25.

As already mentioned, fig. 3 shows a process step for removing the vacuum bag 7 from the preform element 6 supported on the support portions 17. According to fig. 3, the upper section of the vacuum bag 7 covering the upper surface 8 is cut open, and, in this example, the vacuum foil is folded to the sides by manufacturing personnel 30.

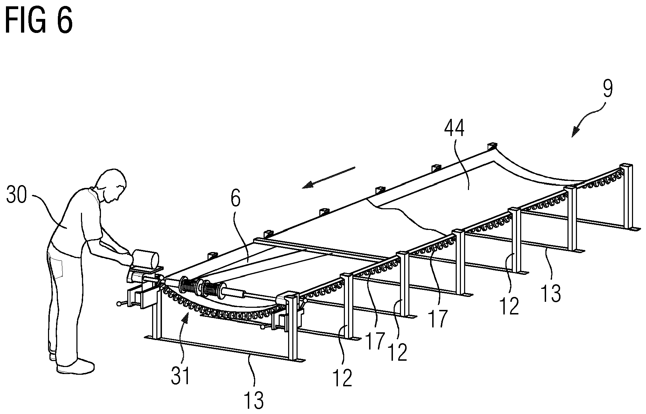

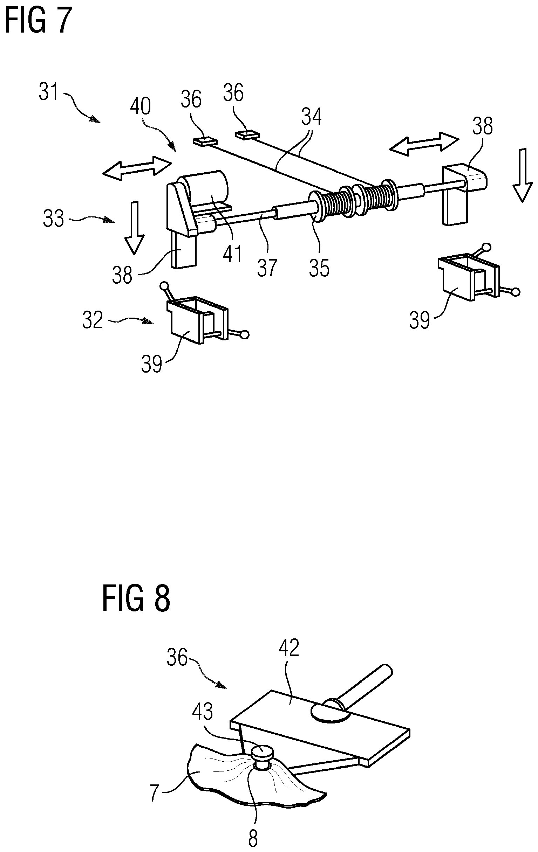

Fig. 6 shows an alternative realization of this step, wherein a pulling device, in this case a winch assistance device 31 is mounted to the column elements 12 at one end of the preform element support device 9. This winch assistance device 31 is more closely shown and explained with respect to figures 7 and 8.

The winch assistance device 31 is an expedient tool explained with regard to fig. 7. As shown in fig. 7, the winch assistance device 31 comprises a mounting means 32 for releasably mounting the winch assistance device 31 to a component in the manufacturing system and a winch assembly 33 with, in this case, two towing cables 34 windable on reels 35, which each have coupling means 36 on their free ends. The reels 35 are mounted to a rotatable, telescoping shaft 37 received in lateral bearing elements 38. The bearing elements 38 comprise connection portions for connecting to the mounting means 32, which, in this case, comprise two mounting brackets 39. An actuator 40, in this case comprising an electric motor 41, for rotating the shaft 37 and hence winding and unwinding the towing cable 34 is mounted to one of the bearing elements 38. By using a telescoping shaft 37, a width adjusting device is provided.

Fig. 8 more closely shows an embodiment of the coupling means 36, in this case comprising a plate-like, tensile and/or flexible coupling element 42, which has a through hole. A coupling pin 43 fits into the through hole as well as into the through hole 8 (handling hole) of the vacuum bag 7 of the preform elements 6.

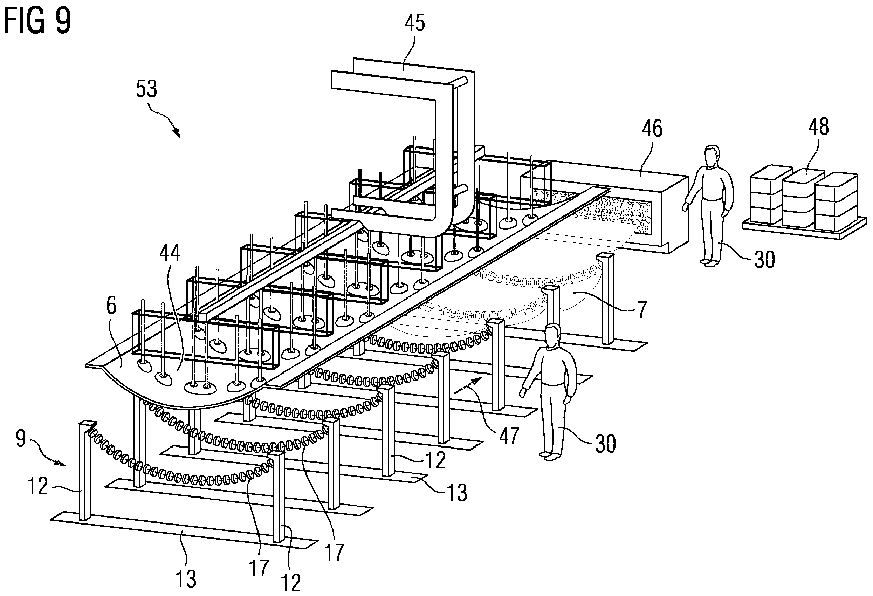

Fig. 9 explains further process steps at the work station 53. After the upper section of the vacuum bag 7 has been removed and the upper surface 44 of the preform element 6 has been exposed, a lifting device 45, in this case a vacuum lifter, engages the upper surface 44 and lifts the preform element 6 from the lower section of the vacuum bag 7, which remains on the support portion 17. The lifting device 45 may, for example, directly move the preform element 6 to a blade mold and/or to a transport and/or storage device, for example a rack.

After the preform element 6 has been lifted, the material of the vacuum bag 7, in particular a vacuum foil, may be removed from the preform element support device 9, in this case by a shredding device 46, which also pulls the material in, as indicated by arrow 47. The shredding device 46 may also pack and compress the material of the vacuum bag 7 into manageable packages 48 which can be sent for recycling.

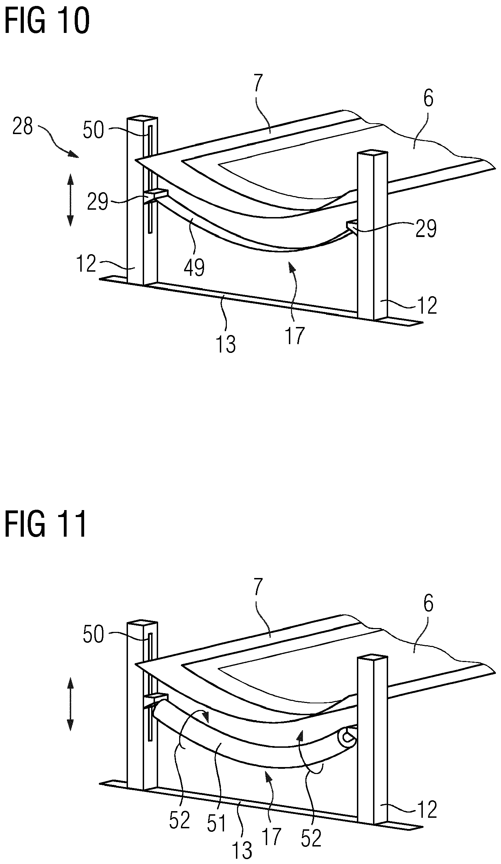

Fig. 10 shows a module of a modified embodiment of the preform element support device 9. Here, the support portion 17 comprises a strap 49 having a low-friction material on its surface such that the preform element 6 in the vacuum bag 7 can slide easily on its surface. The height adjustment means 28, in this case, comprise a vertical rail 50 in the column element 12. For example, the mounting component 29 may be or comprise a carriage running inside the column 12 for height adjustment.

Finally, fig. 11 shows a further implementation of the support portions 17, which, in this case, comprise a flexible, at least essentially cylindrical support pillow 51 which is rotatable around its central axis, as indicated by arrows 52 and hence also allow easy movements of preform elements 6 in vacuum bags 7 in the longitudinal direction 18 over the support portions 17.

Although the present invention has been described in detail with reference to the preferred embodiment, the present invention is not limited by the disclosed examples from which the skilled person is able to derive other variations without departing from the scope of the invention.

## Claims

1. Preform element support device (9) for supporting a longitudinal preform element (6), in particular for a wind turbine blade, during removal of a vacuum bag (7) of the preform element (6), comprising
- vertically extending holding means (10) at each lateral side positioned at a lateral distance (11), and
- multiple, laterally extending support portions (17) spanning the lateral distance (11) between the holding means (10), the multiple support portions (17) having a staggered arrangement in the longitudinal direction (18),
- wherein the support portions (17) are saggingly mounted to the holding means (10) and are flexible to conform to a shape of a preform element (6) supported on the support portions (17).

2. Preform element support device according to claim 1, **characterized in that** the support portions (17) comprise a carrying wire (19), in particular having rollers (20) mounted on it, and/or an at least essentially cylindrical, in particular rotatingly mounted, support pillow (51) and/or at least one strap-like element (49) having a contact surface, in particular comprising a low friction material, for the preform element (6).

3. Preform element support device according to claim 1 or 2, **characterized in that** it further comprises a positioning device (14) for the holding means (10) to adjust different lateral distances (11).

4. Preform element support device according to claim 3, **characterized in that** the holding means (10) comprise two laterally opposingly positioned column elements (12) for each support portion (17), wherein the positioning device (14) is configured to individually and/or collectively adjust the lateral position of each of the column elements (12).

5. Preform element support device according to claim 4, **characterized in that** the positioning device (14) comprises shared lateral rails (13) for each pair of laterally opposingly positioned column elements (12), the rails (13) extending in the lateral direction at each support position.

6. Preform element support device according to one of claims 3 to 5, **characterized in that** a lateral distance compensating device (23) is provided for each support portion (17) .

7. Preform element support device according to claim 6, **characterized in that** the flexible support portion (17) extends into the holding means (10), is deflected into the height direction and attached to a height-adjustable plate (24) of the lateral distance compensating device (23), in particular via a spring (25).

8. Preform element support device according to one of the preceding claims, **characterized in that** the support portions (17) are mounted to the holding means (10) at at least one side by a mounting component (29) located at least partly outside of the holding means (10), which is height-adjustable.

9. Preform element support device according to claim 8, **characterized in that** a height adjustment means (28) for the mounting components (29) comprises vertical rails (50) in the holding means (10).

10. Preform element support device according to one of the preceding claims, **characterized in that** the support portions (17) are attached to the holding means (10) via a resiliently length-adjustable element, in particular a spring (25).

11. Work station (53) for removing a vacuum bag (7) from a longitudinal preform element (6), in particular for a wind turbine blade, wherein the work station (53) comprises a preform element support device (9) according to one of the preceding claims and at least one assistance device for removing the vacuum bag (7).

12. Work station according to claim 11, **characterized in that** the assistance device comprises a lifting device (45) for lifting the preform element (6).

13. Work station according to claim 11 or 12, **characterized in that** the assistance device comprises at least one pulling device, in particular a winch assistance device (31), for pulling an upper section of the vacuum bag (7) from the preform element (6).

14. Work station according to claim 13, **characterized in that** the assistance device comprises a shredding and/or packing device (46) for the vacuum bag (7).

15. Method for removing a vacuum bag (7) from a longitudinal preform element (6), in particular for a wind turbine blade, using a preform element support device (9) according to one of the claims 1 to 10 or a work station (53) according to one of the claims 11 to 14, wherein
- the preform element (6) is placed on the support portions (17) of the preform element support device (9), in particular after adjusting the preform element support device (9) to at least a width of the preform element (6),
- an upper section of the vacuum bag (7) covering an upper surface (44) of the preform element (6) is removed,
- a lifting device (45) engaging the exposed upper surface (44) of the preform element (6), in particular a vacuum lifter, lifts the preform element (6) from the preform element support device 89), such that the lower section of the vacuum bag (7) remains on the support portions (17), and
- the vacuum bag (7) is removed from the preform element support device (9).
